# EUROPÄISCHE PATENTSCHRIFT

(11) **EP 4 081 767 B1**
(45) Veröffentlichungstag und Bekanntmachung des Hinweises auf die Patenterteilung: **05.03.2025**
(21) Anmeldenummer: 21778021.2
(22) Anmeldetag: 16.09.2021
(51) Int. Cl.: G06T 7/60, G06T 7/73, G01F 23/284, G01F 22/00, G01S 13/88, G01S 13/90, G01S 7/41

(54) **FÜLLSTANDSBESTIMMUNG VON ÖLTANKS DURCH RADARBILDGEBUNG EINES SATELLITEN**
DETERMINING THE FILL LEVEL OF OIL TANKS BY SATELLITE RADAR IMAGING
DÉTERMINATION DE NIVEAU DE REMPLISSAGE DE RÉSERVOIRS D'HYDROCARBURES PAR IMAGERIE RADAR PAR SATELLITE

(30) Priorität: 17.09.2020 DE 102020124253
(43) Veröffentlichungstag der Anmeldung: 02.11.2022
(73) Patentinhaber: Deutsches Zentrum für Luft- und Raumfahrt e.V., 53227 Bonn (DE)
(72) Erfinder: VILLAMIL LOPEZ, Carlos, 80637 München (DE)
(74) Vertreter: Rösler Rasch van der Heide & Partner
(86) Internationale Anmeldenummer: PCT/EP2021/075421
(87) Internationale Veröffentlichungsnummer: WO 2022/058402

(56) Entgegenhaltungen:
- WO-A1-2019/098280
- CN-A- 110 276 796
- CN-A- 111 540 007
- US-A- 5 424 742
- US-B2- 10 672 139

## Beschreibung

Die Erfindung betrifft ein Verfahren zum Ermitteln eines Füllstands eines zylindrischen Öltanks mit einer Mantelwand und einem Schwimmdach sowie ein Radarsystem für einen Satelliten zum Ermitteln eines Füllstands eines zylindrischen Öltanks mit einer Mantelwand und einem Schwimmdach.

Die folgenden Informationen beziehen sich nicht notwendigerweise auf ein bestimmtes Dokument im Stand der Technik, sondern geben allgemein bekannte Informationen wieder: Große Mengen von Rohöl oder von raffinierten Endprodukten werden typischerweise in großen zylindrischen Tanks gelagert. Um die Bildung einer Gasblase mit entzündlichen und umweltschädlichen Dämpfen zwischen dem Dach des Tanks und dem darin gelagerten Öl bei Veränderungen im Füllstand zu vermeiden, weisen solche Öltanks typischerweise ein Schwimmdach (engl."floating roof") auf. Dieses Schwimmdach hebt und senkt sich zusammen mit dem Füllstand des Öltanks, da das Schwimmdach direkt auf der Oberfläche des Öls oder Endprodukts aufliegt, ohne dass sich zwischen Dach und Öl oder Endprodukt die oben genannten Dämpfe sammeln. Daraus folgt, dass durch eine Beobachtung der Höhe des Schwimmdachs Rückschlüsse gezogen werden können, welchen Füllstand der jeweilige Öltank aufweist. Das Wissen über einen Füllstand eines Öltanks kann von erheblicher wirtschaftlicher und strategischer Bedeutung sein.

Im Stand der Technik ist es prinzipiell bekannt, auf Basis von optischen Informationen, das heißt Bildern auf Basis von Wellenlängen im sichtbaren Bereich, Informationen über Öltanks zu generieren. Hierzu betrifft beispielsweise die US 2014/0363084 A1 ein System zur Überwachung eines Öltanks, mit einem Extraktionsmodul und mit einem Analysemodul, wobei das Extraktionsmodul Informationen aus Bilddaten extrahiert und wobei das Analysemodul Operationen auf Basis der extrahierten Informationen ausführt. Nachteilig an der Informationsgewinnung durch solche optische Informationen ist, dass die Bilderfassung stark abhängig von externen Bedingungen ist, wie von Sonneneinstrahlung, von Wolken oberhalb der Öltanks, Staub in der Luft, und Ähnlichem.

Die Veröffentlichung mit dem Titel "Oil Storage Estimation with Time-Series L-Band Sar Imagery", veröffentlicht durch das Symposium 2018 "International Geoscience and Remote Sensing" (IGARSS), mit den Autoren Takuma ANAHARA und Masanobu SHIMADA, zeigt ferner eine Möglichkeit auf, eine Veränderung der Position des Schwimmdachs eines Öltanks zwischen verschiedenen Zeitpunkten durch Radartechnik zu ermitteln. Damit sind das Volumen sowie die maximale Kapazität des betrachteten Öltanks bekannt. Es wird dabei jedoch eine Serie von Radarbildern einer SAR-Radarvorrichtung (SAR = "Synthetic Aperture Radar") benötigt, was die Effizienz der Methode herabsetzt. Ferner wird nur ein einziger Punkt auf dem Schwimmdach verfolgt, was die Genauigkeit herabsetzen kann.

Ferner betrifft die US 10,672,139 B2 ein Verfahren zum Messen eines Flüssigkeitsvolumens und/oder einer entsprechenden Füllrate von Schwimmdachtanks, welches das Auswählen eines zu überwachenden Interessengebiets (AOI) an der Erdoberfläche umfasst, das Sammeln geografischer Koordinaten von Tanks in dem AOI und das Herunterladen und Vorverarbeiten von Zeitreihen von SAR-Referenzbildern, die das AOI abdecken. Das Verfahren umfasst ferner das Projizieren geografischer Koordinaten der Tanks auf die Zeitreihen der Bilder, um Pixelkoordinaten der Tanks zu bestimmen, und das Bestimmen von Tankabmessungen durch Verarbeitung der Bilder an den Pixelkoordinaten. Das Verfahren umfasst außerdem das Herunterladen und Vorverarbeiten mindestens eines neuen SAR-Bilds über dem AOI und das Registrieren desselben auf den Referenzbildern und für jeden Tank des AOI das Erkennen eines hellen Flecks in dem neuen SAR-Bild, der dem Dach des Tanks entspricht, und das Umwandeln seiner Pixelkoordinaten in Flüssigkeitsvolumen- und/oder Füllrateninformationen.

Die WO 2019/098280 A1 betrifft darüberhinaus ein System, ein Verfahren, ein Programm und ein Aufzeichnungsmedium, das das Programm zum Schätzen der Position oder des Positionsänderungsbetrags einer rechtwinkligen Struktur in einer Struktur speichert. Hierbei wird ein SAR-Intensitätsbild einschließlich eines Zielbereichs zu mehreren Zeiten betrachtet.

Die CN 111540007 A betrifft außerdem ein Verfahren zum Schätzen der Speicherkapazität eines Öltanks unter Verwendung von SAR-Bildern, die Schritte sind wie folgt: Schritt 1: Identifizieren des Öltanks aus dem SAR-Bild, wobei der Öltank ein Öltank mit schwimmendem Dach ist; Schritt 2: Verwenden einer Schwellensegmentierung, um Tankoberseite, Öltankunterseite und Öltankschwimmdach zu identifizieren; Schritt 3: Bestimmen von Azimut und Einfallswinkel während der Satellitenbeobachtung; Schritt 4: Bestimmen einer tatsächliche Höhe des Öltanks; Schritt 5: Berechnen des Fassungsvermögens des Öltanks; Schritt 6: Bestimmen der Höhe des Schwimmdachs des Öltanks; Schritt 7: Berechnen einer Speicherrate und des Speichervolumens des Öltanks.

Die CN 110276796 A betrifft schließlich ein Speicherschätzverfahren für einen Schwimmdachöltank basierend auf einem hochauflösenden SAR-Bild und gehört zum technischen Gebiet der SAR-Fernerkundungsbildverarbeitung und -analyse. Die CN 110276796 A nutzt dabei die Dieder-Reflexionseigenschaften einer hochauflösenden SAR-Fernerfassungsabbildung und die geometrischen Eigenschaften einer Bildabbildung und berechnet die Höhe H zwischen Boden und Oberseite des Öltanks am nahen Ende, um die Höhe der schwimmenden oberen Oberfläche des Öltanks und der Oberseite der Innenwand des Öltanks am fernen Ende h auf dem SAR-Bild direkt aus dem Abstand zwischen der Oberseite des proximalen Öltanks und der Oberseite des Öltanks am fernen Ende messen, die durch Sekundärreflexion des Bildintensitäts-Spitzenpunkts als Durchmesser des Öltanks gebildet wird, um schließlich das Ölspeichervolumen des Öltanks erhalten.

Aufgabe der Erfindung ist es, den Füllstand eines solchen großen, insbesondere zylindrischen, Tanks für Rohöl oder für ein raffiniertes Endprodukt präzise, effizient und unabhängig vom Sonnenstand zu ermitteln.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Ermitteln eines Füllstands eines zylindrischen Öltanks mit einer Mantelwand und einem Schwimmdach, aufweisend die Schritte:
- Aussenden von Mikrowellen von einem in einer Erdumlaufbahn kreisenden oder stehenden Satelliten aus Schrägsicht in Richtung des auf der Erdoberfläche befindlichen zylindrischen Öltanks,
- Empfangen von am zylindrischen Öltank reflektierten Mikrowellen und Erzeugen eines Radarbilds nach einer Methode der synthetischen Apertur,
- Ermitteln einer Vielzahl von Punktstreuern aus dem Radarbild durch Bildverarbeitung und/oder Signalverarbeitung so, dass das Radarbild nur noch binäre Informationen aufweist, wobei die Punktstreuer durch Reflexionen der auf den zylindrischen Öltank treffenden Mikrowellen entstehen und auf dem Radarbild als sich farblich abhebende Punkte erscheinen,
- Erzeugen und Anpassen von zumindest zwei Halbkreisen so unter Verwendung eines Verfahrens der nichtlinearen Optimierung oder einer Hough Transformation, dass die Punktstreuer auf oder möglichst nahe an den Halbkreisen liegen, wobei die Halbkreise zumindest folgende aufweisen: Ein einer Berührlinie einer Außenseite der Mantelwand mit dem Erdboden zugeordneter erster Halbkreis, und ein einer Berührlinie einer Innenseite der Mantelwand mit einer oberen Stirnfläche des Schwimmdachs zugeordneter zweiter Halbkreis,
- Ermitteln eines Durchmessers des Öltanks und einer Höhe des Schwimmdachs gegenüber dem Erdboden aus dem jeweils angepassten ersten Halbkreis und zweiten Halbkreis, und
- Ermitteln des Füllstands des Öltanks aus dem ermittelten Durchmesser des Öltanks und der Höhe des Schwimmdachs.

Während die Mantelwand des zylindrischen Öltanks einen kreisförmigen Querschnitt aufweist und sich über eine bestimmte Höhe erstreckt, bildet einerseits der Erdboden (insbesondere ein Fundament auf dem Erdboden) eine untere Stirnseite des zylindrischen Öltanks, und die Oberseite des Schwimmdachs eine obere Stirnseite.

Der Füllstand eines zylindrischen Öltanks gibt insbesondere an, mit wie viel Rohöl oder einem Endprodukt daraus der Öltank aktuell befüllt ist. Wie oben erläutert, hebt und senkt sich das Schwimmdach zusammen mit dem Füllstand des Öltanks. Da die Dicke des Schwimmdaches als verhältnismäßig klein gegenüber der Höhe der Mantelwand des zylindrischen Öltanks und typischerweise auch klein im Vergleich zum durchschnittlichen Füllstand des Öltanks ist, wird diese Dicke bevorzugt vernachlässigt und die Höhe der Oberfläche der Stirnseite des Schwimmdachs auch als Höhe des Füllstands angenommen. Alternativ bevorzugt kann ein a priori bekannter Wert für die Dicke des Schwimmdachs von der ermittelten Höhe des Schwimmdachs abgezogen werden, wobei dieser Wert auch geschätzt werden kann.

Der Satellit weist insbesondere eine entsprechende Sendeantenne auf und eine Empfangsantenne auf, wobei die Empfangsantenne und die Sendeantenne auch in eine gemeinsame Radarantenne integriert sein können. Kreist der Satellit in einer Erdumlaufbahn, überfliegt er in seiner Trajektorie eine Reihe von Gebieten, die vom Satelliten beobachtet werden können. Der stehende Satellit dagegen ist ein geostationärer Satellit, der sich im Takt der Erddrehung mit dieser mitdreht.

Mikrowellen sind eine Form elektromagnetischer Strahlung im Bereich insbesondere zwischen 300 MHz und 300 GHz, das heißt im Bereich mit Wellenlängen zwischen 1 mm und 1 m. Diese können auch synonym als Radarstrahlen bezeichnet werden.

Der Begriff der "Schrägsicht" bedeutet dabei, dass der Satellit nicht exakt oberhalb des Öltanks steht, das heißt, dass der Öltank vom Satelliten mit einer Abweichung zum Nadir erfasst wird. In anderen Worten ist die Position des Satelliten relativ gegenüber dem beobachteten zylindrischen Öltank so, dass eine Senkrechte am Ort des beobachteten zylindrischen Öltanks gegenüber der lokalen Oberfläche des Referenzellipsoids der Erde einen Winkel ungleich null gegenüber einer gedachten Verbindungslinie zwischen dem beobachteten zylindrischen Öltank und dem Satelliten aufweist.

Die Position des zu beobachtenden zylindrischen Öltanks kann dabei durch Vorwissen bekannt sein. Insbesondere existieren eine Reihe von Karten, die die Position von Öltanks, beispielsweise auf Raffineriegelände, angeben. Viele solcher Öltanks sind beispielsweise der Karte "OpenStreetMap" zu entnehmen. Alternativ bevorzugt dazu kann die Position der Öltanks in einem ersten Durchlauf einer radargestützten Bildgebung des Satelliten nach einer Methode der synthetischen Appertur ermittelt werden, bevorzugt durch Bilderkennung oder andere automatisierte Methoden der künstlichen Intelligenz. Ist somit die Position des zu beobachtenden zylindrischen Öltanks bekannt, kann zusammen mit der typischerweise bekannten Position des Satelliten eine Mikrowellenantenne so ausgerichtet werden, dass der zu beobachtende zylindrische Öltank von Mikrowellen des Satelliten angestrahlt wird.

Das Ermitteln der Vielzahl von Punktstreuern aus dem Radarbild erfolgt durch Bildverarbeitung und/oder Signalverarbeitung. Die Orte am zylindrischen Öltank, an denen Doppelreflexionen erfolgen, erscheinen im Radarbild als farblich besonders auffällig, insbesondere als besonders helle Stellen, idealerweise Punkte. Je höher die Auflösung des Radarbilds ist, umso eher sind diese hellen Stellen ideale Punkte. Indem die besonders hervortretenden Punkte betrachtet werden und der Rest (der in der Literatur oft als "Clutter" bezeichnet wird) herausgefiltert wird, wird insbesondere der Rauschanteil des Radarbildes vermindert, da andere Mehrfachreflexionen und Sprenkelrauschen (sogenanntes "speckle noise") herausgefiltert wird. Erfindungsgemäß erfolgt das Ermitteln der Vielzahl von Punktstreuern aus dem Radarbild durch Bildverarbeitung und/oder Signalverarbeitung so, dass das Radarbild nur noch binäre Informationen, insbesondere schwarz-weiß Informationen aufweist. Im Idealfall verbleibt daher vorteilhaft ein bearbeitetes Radarbild, das im Wesentlichen nur noch Punktstreuer aus Reflexionen am zylindrischen Öltank zeigt.

In Radarbildern, die von Beobachtungen mit Radar nach einer Methode der synthetischen Apertur stammen, werden typischerweise Stellen mit nahezu punktförmigen Streuungen "Punktstreuer" genannt (engl. sogenannte "coherent scatterers"). Solche Punktstreuer dominieren typischerweise ein durch die Auflösung bestimmtes Gebietselement des Radarbildes (Pixel des Bildes). Ein solches Pixel, das eine größere Anzahl von statistisch gesehen identischen Punktstreuern aufweist, die darüber hinaus zufällig verteilt sind und von denen keines dominant erscheint, wird auch als "Clutter" bezeichnet. Verschiedene Methoden sind bekannt, um solche Punktstreuer in einem einzelnen hochauflösenden Radarbild aus SAR-Radar (SAR: synthetisches Apertur Radar) zu detektieren. Eine Übersicht solcher bekannter Methoden findet sich in der Veröffentlichung mit dem Titel "A New Detection Algorithm for Coherent Scatterers in SAR Data", veröffentlicht in "IEEE Transactions on Geoscience and Remote Sensing" im Jahr 2015 mit den Autoren: Maria J. SANJUAN-FERRER, Irena HAJNSEK, Konstantinos P. PAPATHANASSIOU and Alberto MOREIRA. Eine dieser Vorgehensweisen kann dazu verwendet wurden, um solche Punktstreuer wie oben und im folgenden beschrieben zu detektieren. Die genaue Entfernung (die sogenannte "Range") zwischen dem Radarsensor am Satelliten und jedem der detektierten Punktstreuer kann dann mit sub-pixel-Genauigkeit (d. h. eine höhere Genauigkeit, als die Entfernungsauflösung des SAR-Radarsensor selbst hergibt) ermittelt werden. Auch dies beschreibt die obige Veröffentlichung, die hiermit einbezogen wird. Dies verbessert vorteilhaft die Genauigkeit bei der Ermittlung der Höhe des Schwimmdachs, da eine genauere Entfernungsermittlung möglich ist.

Die Halbkreise werden insbesondere anhand ihrer folgenden Parameter angepasst: Ort ihres Mittelpunkts, Radius oder Durchmesser, scheinbare Versetzung der Halbkreise zueinander. Da der Satellit aus Schrägsicht auf den zu beobachtenden Öltank gerichtet ist, können auf der Erdoberfläche horizontal entferntere Objekte durch entsprechende Laufzeiterfassung der Mikrowellen als weiter entfernt liegend erfasst werden, da die Mikrowellen eine längere Laufzeit aufweisen, je weiter das jeweilige Objekt in der Horizontalen gegenüber dem Nadir aus Sicht des Satelliten entfernt ist. Finden jedoch Reflexionen an einem Objektbereich in einer gewissen Höhe oberhalb der Erdoberfläche statt, werden die Mikrowellen eine geringere Laufzeit aufweisen und damit als näher am Nadir aus Sicht des Satelliten liegend erfasst werden. Dies äußert sich in der Versetzung der (näherungsweise) auf den Halbkreisen liegenden Punktstreuern relativ zueinander. Weiterhin bevorzugt werden die Halbkreise nur höchstens bis zu vorgegebenen Restriktionen angepasst, wobei die Restriktionen insbesondere einen jeweils höchsten Wert für Radius oder Durchmesser, und Höhe des Öltanks bzw. des Schwimmdaches aufweisen.

Der Grund dafür, dass prinzipiell nur Halbkreise anstatt von Vollkreisen angepasst werden, liegt darin, dass ein insbesondere metallischer zylindrischer Öltank zu Totalreflexionen der Mikrowellen führt. Im Schatten der Mikrowellen am zylindrischen Öltank werden daher keine Reflexionen erfasst. Prinzipiell sind daher drei Halbkreise durch den Satelliten identifizierbar, da an diesen Berührlinien Doppelreflexionen entstehen. Ein erster Halbkreis ergibt sich am Übergang der Außenwand der Mantelfläche des zylindrischen Öltanks zum Boden auf derjenigen Halbseite des Öltanks, der zum Satelliten hin gewandt ist. Ein zweiter Halbkreis aus einer zweiten Doppelreflexion im Sichtbereich des Satelliten ergibt sich auf der angestrahlten Innenwand der Mantelfläche am Übergang zur Oberseite der Stirnfläche des Schwimmdaches. Ein dritter Halbkreis aus einer dritten Doppelreflexion ergibt sich entlang der Außenseite der Mantelwand des Öltanks dort, wo ein Wartungsgang im Bereich der oberen Kante der Mantelwand verläuft, wieder jedoch an der zum Satelliten gewandten Seite. Das Erfassen des ersten und des zweiten Halbkreises reicht jedoch aus, um den aktuellen Füllstand des Öltanks zu bestimmen. Denn dann ist die Entfernung zwischen Satelliten und Erdboden durch den unteren Halbkreis am Erdboden bekannt. Außerdem ist durch die Erfassung des zweiten Halbkreises an der Stirnseite des Schwimmdaches die relative Höhe zum Erdboden des Schwimmdaches bekannt. Aus dem Radius oder dem Durchmesser des unteren Halbkreises bzw. dieses zweiten Halbkreises am Schwimmdach ist die Querschnittsfläche des Öltanks bekannt. Prinzipiell ist es unerheblich, ob der Durchmesser oder ein Radius des Öltanks ermittelt wird, beide Größen sind ohne Schwierigkeiten ineinander umrechenbar. Durch den Abstand des Schwimmdaches zum Erdboden ist außerdem eine Höhe bekannt, und aus der Höhe und der Querschnittsfläche lässt sich ein Volumen des Öls oder des Endprodukts berechnen, mit dem der Öltank gefüllt ist.

Da der beobachtete Tank eine zylindrische Form aufweist, bilden die beobachtbaren Übergänge zwischen Außenwand und Erdboden, zwischen Wartungsgang und Außenwand, sowie zwischen innerer Wand und oberer Stirnseite des Schwimmdachs Halbkreise aus, die wegen der Schrägsicht ellipsenförmig im Radarbild erscheinen. Dies führt jedoch zu keiner Einschränkung in den Berechnungsmöglichkeiten, da Verhältnisse der Ausdehnungen der Ellipsenachsen jeweils durch den Einfallswinkel der Mikrowellen gegenüber der Erdoberfläche berechnet werden können.

Vorteilhaft wird angenommen, dass die Dicke der Mantelwand des zylindrischen Öltanks sowie die Dicke des Schwimmdachs in erster Näherung vernachlässigbar sind. Wird das erfindungsgemäße Verfahren über mehrere Zeitabstände wiederholt, um vor allem die Änderung des Füllstands des beobachteten zylindrischen Öltanks zu verfolgen, entfällt durch die Subtraktion der jeweils ermittelten Höhen des Schwimmdachs dessen Dicke ohnehin, da die Dicke über die Zeit konstant bleibt.

Es ist daher eine vorteilhafte Wirkung der Erfindung, dass durch die Verwendung einer Methode der synthetischen Apertur (SAR) die Beobachtung unabhängig vom Sonnenstand sowie unabhängig vom Bewölkungsgrad oberhalb eines Öltanks erfolgen kann. Weiterhin ist vorteilhaft die prinzipiell erreichbare Genauigkeit nicht von Umgebungsfaktoren der Umgebung des Öltanks abhängig, sondern nur von der räumlichen Auflösung des Radarsensors, der gewählten Bildgeometrie und der Qualität des Algorithmus, der verwendet wird, um Informationen aus den Sensordaten zu gewinnen. Die vorteilhaft hohe Effizienz der Methode liegt darin, dass nur ein einziges Radarbild eines SAR- Radargeräts benötigt wird, um den aktuellen Füllstand sowie die maximale Kapazität eines Öltanks mit Schwimmdach zu bestimmen. Die Nutzung einer Vielzahl von Punktstreuern (kohärente Streuer, engl. "coherent scatterers") anstatt nur eines einzigen Punktstreuers (insbesondere aus Doppelreflexionen zwischen dem Schwimmdach und den Wänden eines solchen Tanks) ermöglicht weiterhin ein gegenüber dem Stand der Technik hochgenaues und robustes Verfahren zum Ermitteln der aktuellen Höhe eines Schwimmdachs eines Öltanks, darüberhinaus auch den Durchmesser der Mantelwand. Außerdem erlaubt vorteilhaft die Verwendung der Informationen aus den Punktstreuern die Erfassung der Höhe des Schwimmdachs mit sub-Pixel-Genauigkeit. Wird darüber hinaus eine Vielzahl von Radarbildern für verschiedene Zeitpunkte erzeugt, kann das vorgeschlagene Verfahren deren Informationsgehalt synergetisch bündeln, um die Genauigkeit aller Radarbilder und die gesamte Robustheit des Verfahrens zu verbessern, anstatt nur einzelne prinzipiell technisch voneinander unabhängige Radarbilder zu erzeugen.

Gemäß einer vorteilhaften Ausführungsform werden zumindest drei Halbkreise erzeugt und so angepasst, dass die Punktstreuer auf oder möglichst nahe an den Halbkreisen liegen, wobei die Halbkreise einen dritten Halbkreis aufweisen, der einer Berührlinie der Außenseite der Mantelwand mit einem Wartungsgang im Bereich der oberen Kante der Mantelwand zugeordnet ist, wobei eine gesamte Höhe des Öltanks ermittelt wird, wobei ein maximal möglicher Füllstand des Öltanks aus dem ermittelten Durchmesser und der gesamten Höhe des Öltanks ermittelt wird. Ist die relative Lage zueinander und Ausdehnung der jeweiligen der drei oben genannten Halbkreise bekannt, ist auch (zumindest näherungsweise) die maximalen Kapazität des zylindrischen Öltanks bekannt, sowie der aktuelle Füllzustand, da nicht nur die Höhe des Schwimmdachs gegenüber den Außenwänden des zylindrischen Öltanks bekannt ist, sondern auch die maximale Höhe des Schwimmdachs, die mit der Höhe des Wartungsgangs am oberen Rand der Mantelwand korreliert. Näherungsweise kann die Höhe des Wartungsgangs direkt als maximale Höhe des Schwimmdachs angenommen werden; oder, auf die Höhe des Wartungsgangs wird ein vorgegebener konstanter Betrag addiert oder subtrahiert, um auf die maximale Höhe des Schwimmdachs zu schließen.

Gemäß einer weiteren vorteilhaften Ausführungsform wird beim Anpassen der Halbkreise zumindest eine der folgenden Restriktionen angewendet:
- alle Halbkreise weisen den gleichen Radius auf;
- die Mittelpunkte aller Halbkreise liegen auf einer gemeinsamen zur Erdoberfläche senkrechten Geraden;
- Nur der erste Halbkreis und der dritte Halbkreis liegen auf einer gemeinsamen Seite der Mantelwand;

Gemäß einer weiteren vorteilhaften Ausführungsform wird ein einziges Radarbild nach einer Methode der synthetischen Apertur erzeugt. Dies steigert vorteilhaft die Effizienz gegenüber Systemen, bei denen mehrere Radarbilder benötigt werden.

Erfindungsgemäß wird zum Erzeugen und Anpassen der Halbkreise ein Verfahren der nichtlinearen Optimierung oder eine Hough Transformation verwendet. Eine erste Möglichkeit der Anpassung der Halbkreise besteht darin, durch eine sehr große Vielzahl von möglichen Halbkreisen einen jeweils am besten zu den lokalen Punktstreuern passenden auszuwählen. Eine weitere Möglichkeit ist die Anwendung eines Verfahrens der nichtlinearen Optimierung, insbesondere mit deterministischer Vorgehensweise, beispielsweise einer Methode des schnellsten Abstiegs zur Minimierung einer Kostenfunktion oder einer quadratischen Optimierung mit einer solchen Kostenfunktion, wobei die Kostenfunktion die Summe der Abstände zwischen den Punktstreuern und einem jeweiligen anzupassenden Halbkreis angibt. Andere Methoden der nichtlinearen Optimierung sind ebenfalls möglich, insbesondere ein Evolutionsalgorithmus oder genetische Algorithmen. Eine Hough Transformation ist ein bekanntes Verfahren zur Erkennung von vorgegebenen geometrischen Formen, welches hier insbesondere mit den anzupassenden Halbkreisen ausgeführt wird.

Gemäß einer weiteren vorteilhaften Ausführungsform werden die Verfahrensschritte nach einem der vorhergehenden Ansprüche zu zumindest zwei verschiedenen Zeitpunkten wiederholt ausgeführt, um eine Änderung des Füllstands des Öltanks nachzuverfolgen.

Gemäß einer weiteren vorteilhaften Ausführungsform werden beim Anpassen der Halbkreise alle über die zwei Zeitpunkte am selben Ort verbleibende Punktstreuer der Berührlinie der Außenseite der Mantelwand mit dem Erdboden oder der Berührlinie der Außenseite der Mantelwand mit dem Wartungsgang im Bereich der oberen Kante der Mantelwand zugeordnet, und alle über die Zeit in ihrem Ort veränderlichen Punktstreuer der Berührlinie der Innenseite der Mantelwand des Öltanks mit der oberen Stirnfläche des Schwimmdachs zugeordnet, wobei jeder der betrachteten Punktstreuer auf interferometrische Kohärenz zwischen den zwei Zeitpunkten überprüft wird, um Verwechslungen zwischen den Punktstreuern auszuschließen.

Die betrachteten Punktstreuer werden auf ihre interferometrische Kohärenz zwischen den zwei Zeitpunkten überprüft, da an ein und demselben Ort im Radarbild verschiedene Punktstreuer erscheinen könnten. Daneben, dass aus dem Radarbild die Punktstreuer, die über die zwei Zeitpunkte am selben Ort verbleiben, von den sich bewegenden Punktstreuern getrennt werden, erfolgt vorteilhaft diese Überprüfung auf interferometrische Kohärenz, um sicherzustellen, dass der jeweilige betrachtete verbleibende Punktstreuer über die zwei Zeitpunkte ein und derselbe Punktstreuer ist. Eine hohe interferometrische Kohärenz eines als verbleibend angenommenen Punktstreuers weist dabei auf keine Bewegung desselben Punktstreuers hin, eine niedrige interferometrische Kohärenz auf Änderung des Punktstreuers. Die Trennung zwischen den am selben Ort verbleibenden Punktstreuer und den sich bewegt habenden Punktstreuern ermöglicht letztendlich die Zuordnung der einzelnen Punktstreuer zu den jeweiligen Berührlinien. Die Zuordnung der an ihrem jeweiligen Ort verbleibenden Punktstreuer zu der Berührlinie der Außenseite der Mantelwand mit dem Erdboden bzw. zur Berührlinie der Außenseite der Mantelwand mit dem Wartungsgang erlaubt die Ermittlung eines Durchmessers des Tanks sowie einer maximalen Füllhöhe dieses Tanks. Außerdem wird auf Basis des Durchmessers und durch Zuordnung der sich bewegt habenden Punktstreuer zu der Berührlinie der Innenseite der Mantelwand mit dem Schwimmdach zu dem zweiten Halbkreis für die Ermittlung der aktuellen Höhe des Schwimmdachs ermöglicht, den aktuellen Füllstand des Schwimmdachs zu ermitteln. Vorteilhaft wird in einem ersten Schritt dazu die Höhenänderung und in einem zweiten Schritt die anfängliche absolute Höhe des Schwimmdachs ermittelt.

Gemäß einer weiteren vorteilhaften Ausführungsform wird die Änderung des Füllstands des Öltanks durch Lösen eines Optimierungsproblems ermittelt, wobei das Optimierungsproblem die Suche nach der maximal zusammengehörigen Anzahl von Punktstreuern über die zwei Zeitpunkte umfasst, wobei am selben Ort verbleibende Punktstreuer und über die Zeit in ihrem Ort veränderliche Punktstreuer voneinander getrennt werden, und die Änderung des Füllstands des Öltanks aus der Höhenänderung der über die Zeit in ihrem Ort veränderlichen Punktstreuer ermittelt wird.

Bevorzugt erfolgt dies durch die Analyse einer Kreuz-Korrelation der sich bewegenden Puntkstreuer in den bearbeiteten Radarbildern für verschiedene Zeitpunkte (und im allgemeinen Bewegungen der Punktstreuer) entlang einer Entfernungsachse (die sogenannte "range-axis"). Diese Vorgehensweise nutzt vorteilhaft nicht nur die jeweilige Doppelreflexionen an sich aus, sondern alle physischen Merkmale und Gegebenheiten des Schwimmdachs. Die Änderung des Füllstands kann daher ebenfalls mit sub-pixel-Genauigkeit ermittelt werden, da die Position jedes einzelnen Punktstreuers bezüglich in seiner Entfernung (der sog. "range") mit sub-pixel- Genauigkeit ermittelt werden kann, wie oben beschrieben.

Gemäß einer weiteren vorteilhaften Ausführungsform werden die oben oder im Folgenden erläuterten Verfahrensschritte zu mehr als zwei verschiedenen Zeitpunkten wiederholt ausgeführt, wobei durch mehrfaches Gleichsetzen von an nicht aufeinander folgenden betrachteten Zeitpunkten erfassten Verschiebungen des Schwimmdachs mit der Summe aller erfassten Verschiebungen des Schwimmdachs zwischen den betrachteten Zeitpunkten ein überbestimmtes Gleichungssystem erzeugt wird, um eine Verschiebung des Schwimmdachs über einen vorgegebenen Zeitraum zu ermitteln. Zur Lösung des überbestimmten Gleichungssystems wird bevorzugt eine Methode verwendet, die insbesondere vorteilhaft gegen sogenannte "Ausreißer" robust ist, um das Gesamt-Ergebnis nicht unnötig zu verfälschen. Durch die Verwendung solcher redundanten Informationen kann der Rauschanteil in den verwendeten Daten weiterhin gesenkt werden und vorteilhaft die Genauigkeit im Verfahren erhöht werden, um Halbkreise zu ermitteln, die möglichst exakt der Realität des Öltanks entsprechen.

Sind die Änderungen des Füllstands des Öltanks durch die Höhenveränderungen des Schwimmdachs ermittelt, wird bevorzugt die anfängliche Höhe des Schwimmdachs ermittelt, um ein absolutes Maß des Volumens an gelagertem Öl im Öltank zu jedem Zeitpunkt zu ermitteln, anstatt nur der relativen Änderungen des Füllstands. Die Schätzung der anfänglichen absoluten Höhe des Schwimmdachs wird bevorzugt unter Nutzung mehrerer, insbesondere aller, Radarbilder der verschiedenen Zeitpunkte ermittelt, indem insbesondere der jeweilige Halbkreis aus der jeweiligen Doppelreflexion in jedem der Radarbilder ermittelt wird, und anschließend die für den jeweils vorhergehenden Zeitpunkt ermittelte Veränderung der Höhe des Schwimmdachs verwendet wird, um die Schätzung der anfänglichen Höhe des Schwimmdach zu ermitteln. Sind der Mittelpunkt des Bodens des Tanks, sowie der Radius bzw. der Durchmesser und die maximale Höhe des Schwimmdachs bekannt, muss nicht notwendigerweise eine Hough-Transformation mehr durchgeführt werden, um den zweiten Halbkreis am Übergang der Innenseite der Mantelwand zur Oberseite des Schwimmdachs explizit zu bestimmen. Vielmehr kann eine binäre Schablone erstellt werden, die einen Halbkreis mit dem Radius des Öltanks aufweist, und eine Kreuzkorrelation für alle seiner möglichen Höhen aufgestellt werden. Durch die Verwendung der Vielzahl von Radarbildern der jeweiligen Zeitpunkte, insbesondere alle dieser Radarbilder, zur Ermittlung der anfänglichen Höhe des Schwimmdaches, kann vorteilhaft die Schätzung dieser anfänglichen Höhe genauer und robuster gegenüber Fehlern erfolgen.

Im Falle der Wiederholung der Verfahrensschritte zu mindestens zwei verschiedenen Zeitpunkten, um eine Änderung des Füllstands des Öltanks nachzuverfolgen, wird bevorzugt folgende Vorgehensweise angewendet:
- Detektieren von Punktstreuern für jedes einzelne der Radarbilder,
- Ermitteln von am selben Ort verbliebenen Punktstreuern gegenüber sich bewegenden Punktstreuern,
- Ermitteln eines Radius bzw. Durchmessers des Öltanks und einer Höhe des Öltanks unter Verwendung der Punktstreuer, die als an Ort und Stelle verbleibend detektiert werden, insbesondere unter Verwendung einer Hough-Transformation,
- Ermitteln einer Schätzung einer Höhenänderung des Schwimmdachs jeweils aus paarweise kombinierten Radarbildern einer Vielzahl, insbesondere aller, betrachteten Zeitpunkte, und
- Ermitteln eine Schätzung der anfänglichen Höhe des Schwimmdachs durch Anpassen des zweiten Halbkreises in einer Vielzahl, insbesondere allen, Radarbildern der betrachteten Zeitpunkte.

Ein weiterer Aspekt der Erfindung betrifft ein Radarsystem für einen Satelliten zum Ermitteln eines Füllstands eines zylindrischen Öltanks mit einer Mantelwand und einem Schwimmdach, aufweisend eine Radareinheit, die zum Aussenden von Mikrowellen aus Schrägsicht in Richtung eines auf der Erdoberfläche befindlichen zylindrischen Öltanks und zum Empfangen von am zylindrischen Öltank reflektierten Mikrowellen ausgeführt ist, und aufweisend eine Recheneinheit, die zum Erzeugen eines Radarbilds nach einer Methode der synthetischen Apertur aus den empfangenen Mikrowellen ausgeführt ist, sowie zum Ermitteln einer Vielzahl von Punktstreuern aus dem Radarbild durch Bildverarbeitung und/oder Signalverarbeitung so, dass das Radarbild nur noch binäre Informationen aufweist, wobei die Punktstreuer durch Reflexionen der auf den zylindrischen Öltank treffenden Mikrowellen entstehen und auf dem Radarbild als sich farblich abhebende Punkte erscheinen, und zum Erzeugen und Anpassen von zumindest zwei Halbkreisen so unter Verwendung eines Verfahrens der nichtlinearen Optimierung oder einer Hough Transformation ausgeführt ist, dass die Punktstreuer auf oder möglichst nahe an den Halbkreisen liegen, wobei die Halbkreise zumindest folgende aufweisen: Ein einer Berührlinie der Außenseite der Mantelwand mit dem Erdboden zugeordneter erster Halbkreis, und ein einer Berührlinie einer Innenseite der Mantelwand des Öltanks mit der oberen Stirnfläche des Schwimmdachs zugeordneter zweiter Halbkreis, wobei die Recheneinheit ferner zum Ermitteln eines Durchmessers des Öltanks und einer Höhe des Schwimmdachs gegenüber dem Erdboden aus dem jeweils angepassten ersten Halbkreis und zweiten Halbkreis, und zum Ermitteln des Füllstands des Öltanks aus dem ermittelten Durchmesser des Öltanks und der Höhe des Schwimmdachs ausgeführt ist.

Gleichwertig kann die Recheneinheit am Satelliten angeordnet sein, oder an einer Bodenstation.

Vorteile und bevorzugte Weiterbildungen des vorgeschlagenen Radarsystems ergeben sich durch eine analoge und sinngemäße Übertragung der im Zusammenhang mit dem vorgeschlagenen Verfahren vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Verfahren zum Ermitteln eines Füllstands eines zylindrischen Öltanks gemäß einem Ausführungsbeispiel der Erfindung,
- Fig. 2: einen beispielhaften zylindrischen Öltank,
- Fig. 3: ein Radarsystem bei der Ausführung des Verfahrens nach dem Ausführungsbeispiel der Erfindung, und
- Fig. 4: ein Beispiel aus der realen Anwendung mit Punktstreuern.

Die Darstellungen in den Figuren sind schematisch und nicht maßstäblich.

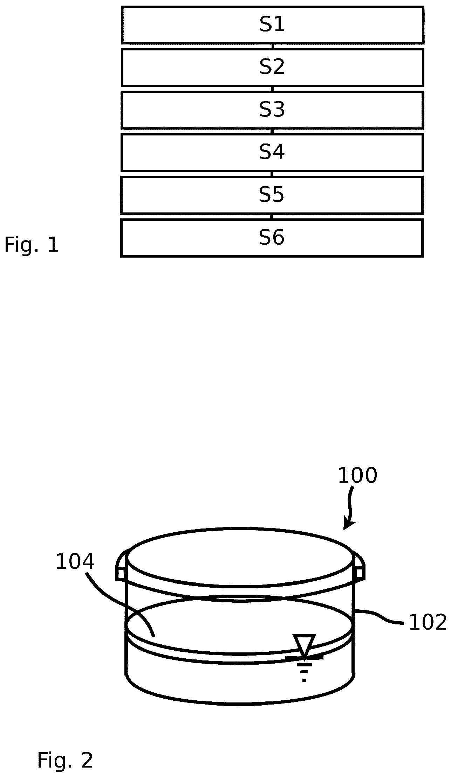

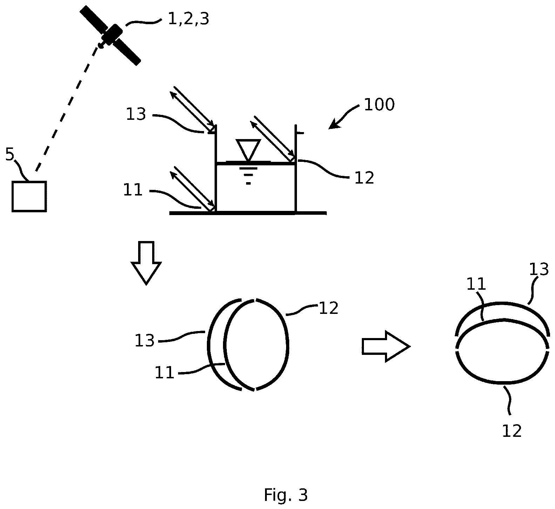

Fig. 1 zeigt ein Verfahren zum Ermitteln eines Füllstands eines zylindrischen Öltanks 100 mit einer Mantelwand 102 und einem Schwimmdach 104. Ein solcher Öltank 100 ist beispielhaft in der Fig. 2 dargestellt. Ferner wird das Verfahren auf einem Satelliten 1 mit einem Radarsystem 2 ausgeführt, welche in der Fig. 3 dargestellt sind. Das im Folgenden erläuterte Verfahren kann daher auch anhand der Fig. 3 nachvollzogen werden. In einem ersten Schritt des Verfahrens erfolgt das Aussenden S1 von Mikrowellen von einem in einer Erdumlaufbahn kreisenden Satelliten 1 aus Schrägsicht in Richtung des auf der Erdoberfläche befindlichen zylindrischen Öltanks 100. Schrägsicht bedeutet dabei, dass der Satellit 1 nicht aus seinem Nadir den Öltank 100 unter sich hat, sondern einen Winkel zu diesem Nadir in Richtung des Öltanks 100 aufweist. In einem zweiten Schritt des Verfahrens erfolgt das Empfangen S2 von am zylindrischen Öltank 100 reflektierten Mikrowellen. Aus den erfassten reflektierten Mikrowellen wird ein einziges Radarbild erzeugt, das bildlich dargestellt werden kann. Dies erfolgt nach einer Methode der synthetischen Apertur (SAR: Synthetische-Apertur-Radar). Schließlich erfolgt das Ermitteln S3 einer Vielzahl von Punktstreuern aus dem Radarbild, wobei die Punktstreuer durch Reflexionen der auf den zylindrischen Öltank 100 treffenden Mikrowellen entstehen und auf dem Radarbild als sich hell abhebende Punkte erscheinen. Das anschließende Erzeugen und Anpassen S4 von drei Halbkreisen erfolgt anschließend so, dass die Punktstreuer auf oder möglichst nahe an den Halbkreisen liegen, wobei die Halbkreise folgende aufweisen: Ein einer Berührlinie einer Außenseite der Mantelwand 102 mit dem Erdboden zugeordneter erster Halbkreis 11, ein einer Berührlinie einer Innenseite der Mantelwand 102 mit einer oberen Stirnfläche des Schwimmdachs 104 zugeordneter zweiter Halbkreis 12, und ein einer Berührlinie der Außenseite der Mantelwand 102 mit einem Wartungsgang im Bereich der oberen Kante der Mantelwand 102 zugeordneter dritter Halbkreis 13. Schließlich erfolgt das Ermitteln S5 eines Durchmessers des Öltanks 100 und einer Höhe des Schwimmdachs 104 gegenüber dem Erdboden aus dem jeweils angepassten ersten Halbkreis 11 und zweiten Halbkreis 12 , und das Ermitteln S6 des Füllstands des Öltanks 100 aus dem ermittelten Durchmesser und der Höhe des Schwimmdachs 104 und das Ermitteln eines maximal möglichen Füllstands des Öltanks 100 aus dem ermittelten Durchmesser und der gesamten Höhe des Öltanks 100 aus dem jeweils angepassten ersten Halbkreis 11 und dritten Halbkreis 13. Beim Anpassen der Halbkreise werden alle der folgenden Restriktionen angewendet: Alle Halbkreise weisen den gleichen Radius auf; die Mittelpunkte aller Halbkreise liegen auf einer gemeinsamen zur Erdoberfläche senkrechten Geraden; und nur der erste Halbkreis 11 und der dritte Halbkreis 13 liegen auf einer gemeinsamen Seite der Mantelwand 102, während der zweite Halbkreis 12 auf einer entgegengesetzten Seite der Mantelwand 102 liegt; Diese Restriktionen sind Teil einer nichtlinearen restringierten Optimierung, bei der die Kostenfunktion aus der Summe der Abstände zwischen den einzelnen Punktstreuern und den anzupassenden Halbkreisen gebildet wird. Auf die Kostenfunktion werden die als Komponente von Kosten transformierten Restriktionen addiert, sodass die Minimierung der Kostenfunktion automatisch zur Einhaltung dieser Restriktionen führt. Der Algorithmus der nichtlinearen Optimierung konvergiert dabei so, dass die Punktstreuer automatisch dem richtigen Halbkreis zugeordnet werden. Punktstreuer

Fig. 2 zeigt einen solchen Öltank 100. Dabei korreliert eine Höhenlage des Schwimmdachs 104 mit einem Pegelstand von Öl im Öltank 100. Die Mantelwand 102 weist einen kreisförmigen Querschnitt auf. Am oberen Ende der Mantelwand 102 ist ein Wartungsgang angeordnet.

Fig. 3 zeigt ein Radarsystem 2 an einem Satelliten 1. Das Radarsystem 2 dient zum Ermitteln eines Füllstands eines zylindrischen Öltanks 100 wie aus Fig. 2. Das Radarsystem 2 weist eine Radareinheit 3 auf, die zum Aussenden von Mikrowellen aus Schrägsicht in Richtung des auf der Erdoberfläche befindlichen zylindrischen Öltanks 100 und zum Empfangen von am zylindrischen Öltank 100 reflektierten Mikrowellen ausgeführt ist. Da der Satellit 1 bezüglich des zylindrischen Öltanks 100 in Schrägsicht ausgerichtet ist, erscheinen die tatsächlich am Öltank 100 vorliegenden Halbkreise im Radarbild ellipsenförmig. Der Grund dafür, dass die oben genannten drei Halbkreise speziell betrachtet werden ist, dass die Strahlung der Mikrowellen durch ihren schrägen Einfallswinkel, hervorgerufen durch die Schrägsicht, durch Doppelreflexionen in Richtung des Satelliten 1 zurücklaufen. Die Doppelreflexionen entstehen an genau den Orten der oben genannten drei gedachten Halbkreise. Die einlaufenden Mikrowellen werden im Falle des ersten Halbkreises 11 und des dritten Halbkreises 13 jeweils zuerst an der Außenfläche der Mantelwand 102 des zylindrischen Öltanks 100 reflektiert. Im Falle des ersten Halbkreises 11 werden die Mikrowellen anschließend am Erdboden reflektiert zurück zum Satelliten 1. Im Falle des dritten Halbkreises 13 werden die Mikrowellen nach der Reflexion an der Außenwand der Mantelwand 102 an einem Wartungsgang im Bereich der oberen Kante der Mantelwand 102 zurück zum Satelliten 1 reflektiert. Im Falle des zweiten Halbkreises 12 werden die einfallenden Mikrowellen zuerst an der Innenseite der Mantelwand 102 reflektiert und diese Reflexion anschließend wiederum von der oberen Stirnfläche des Schwimmdachs 104 des zylindrischen Öltanks 100 in Richtung des Satelliten 1 reflektiert. Eine Recheneinheit 5 des Radarsystems 2 dient zum Erzeugen eines Radarbilds nach einer Methode der synthetischen Apertur aus den empfangenen Mikrowellen, sowie zum Ermitteln einer Vielzahl von Punktstreuern aus dem Radarbild. Die Punktstreuer entstehen durch Reflexionen der auf den zylindrischen Öltank 100 treffenden Mikrowellen und erscheinen auf dem Radarbild als sich farblich abhebende Punkte. Die Recheneinheit 5 dient ferner zum Erzeugen und Anpassen der drei Halbkreise so, dass die Punktstreuer auf oder möglichst nahe an den Halbkreisen liegen, wobei die Halbkreise folgende aufweisen: Ein einer Berührlinie der Außenseite der Mantelwand 102 mit dem Erdboden zugeordneter erster Halbkreis 11, ein einer Berührlinie einer Innenseite der Mantelwand 102 des Öltanks 100 mit der oberen Stirnfläche des Schwimmdachs 104 zugeordneter zweiter Halbkreis 12, und ein einer Berührlinie der Außenseite der Mantelwand 102 mit einem Wartungsgang im Bereich der oberen Kante der Mantelwand 102 zugeordneter dritter Halbkreis. Der erste Halbkreis 11 befindet sich auf Höhe der Erdoberfläche und erscheint daher nicht verzerrt im Radarbild. Der dritte Halbkreis 13 erscheint im Radarbild aus Sicht des Satelliten 1 jedoch näher am Satelliten 1 als der erste Halbkreis 11. Dies liegt daran, dass die Mikrowellen dort in kürzerer Distanz zum Satelliten 1 reflektiert werden und aus Sicht des Satelliten 1 daher eine kürzere Laufzeit aufweisen. Daher werden die am oberen Rand der Mantelwand 102 des Öltanks 100 reflektierten Mikrowellen als im kürzeren horizontalen Abstand zum Satelliten 1 erkannt. Wird diese zweidimensionale Abbildung der Punktstreuer bzw. der darauf gelegten Halbkreise um nochmalige neunzig Grad gedreht, entsteht das letztendliche Abbild in der Fig. 3, dessen drei Halbkreise 11, 12, 13 ein quasi räumliches Abbild des Öltanks 100 ergeben, jedoch aus der gegenüberliegenden Sicht des Satelliten 1. Diese scheinbare Verzerrung der Punktstreuer bzw. der darauf eingestellten Halbkreise wird auch "layover-effect" genannt. Die Recheneinheit 5 ermittelt schließlich aus den geometrischen Maßen der Halbkreise, die als Ellipsen im Radarbild erscheinen, einen Durchmesser des Öltanks 100, eine Höhe des Schwimmdachs 104 gegenüber dem Erdboden und eine Höhe des Öltanks 100. Aus diesen geometrischen Abmaßen des Öltanks 100 in seiner aktuellen Konfiguration ermittelt die Recheneinheit 5 schließlich den aktuellen Füllstand des Öltanks 100 sowie die Kapazität des Öltanks 100.

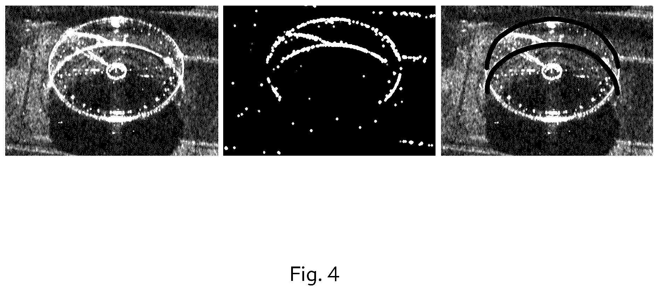

Fig. 4 zeigt ein Beispiel aus der realen Anwendung, wobei das linke der Bilder ein Amplitudenbild zeigt, dass mittlere der Bilder die Punktstreuer ("static coherent scatterers"), und das rechte der Bilder den detektierten ersten 11 und dritten 13 Halbkreis jeweils als dicke schwarze Linien.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche, definiert wird.

### Bezugszeichenliste

- 1: Satellit
- 2: Radarsystem
- 3: Radareinheit
- 5: Recheneinheit
- 11: erster Halbkreis
- 12: zweiter Halbkreis
- 13: dritter Halbkreis
- 100: Öltank
- 102: Mantelwand
- 104: Schwimmdach

- S1: Aussenden
- S2: Empfangen
- S3: Ermitteln
- S4: Anpassen
- S5: Ermitteln
- S6: Ermitteln

## Patentansprüche

1. Verfahren zum Ermitteln eines Füllstands eines zylindrischen Öltanks (100) mit einer Mantelwand (102) und einem Schwimmdach (104), aufweisend die Schritte:
- Aussenden (S1) von Mikrowellen von einem in einer Erdumlaufbahn kreisenden oder stehenden Satelliten (1) aus Schrägsicht in Richtung des auf der Erdoberfläche befindlichen zylindrischen Öltanks (100),
- Empfangen (S2) von am zylindrischen Öltank (100) reflektierten Mikrowellen und Erzeugen eines Radarbilds nach einer Methode der synthetischen Apertur, **gekennzeichnet durch** die Schritte:
- Ermitteln (S3) einer Vielzahl von Punktstreuern aus dem Radarbild durch Bildverarbeitung und/oder Signalverarbeitung so, dass das Radarbild nur noch binäre Informationen aufweist, wobei die Punktstreuer durch Reflexionen der auf den zylindrischen Öltank (100) treffenden Mikrowellen entstehen und auf dem Radarbild als sich farblich abhebende Punkte erscheinen,
- Erzeugen und Anpassen (S4) von zumindest zwei Halbkreisen so unter Verwendung eines Verfahrens der nichtlinearen Optimierung oder einer Hough Transformation, dass die Punktstreuer auf oder möglichst nahe an den Halbkreisen liegen, wobei die Halbkreise zumindest folgende aufweisen: Ein einer Berührlinie einer Außenseite der Mantelwand (102) mit dem Erdboden zugeordneter erster Halbkreis (11), und ein einer Berührlinie einer Innenseite der Mantelwand (102) mit einer oberen Stirnfläche des Schwimmdachs (104) zugeordneter zweiter Halbkreis (12),
- Ermitteln (S5) eines Durchmessers des Öltanks (100) und einer Höhe des Schwimmdachs (104) gegenüber dem Erdboden aus dem jeweils angepassten ersten Halbkreis (11) und zweiten Halbkreis (12), und
- Ermitteln (S6) des Füllstands des Öltanks (100) aus dem ermittelten Durchmesser des Öltanks (100) und der Höhe des Schwimmdachs (104).

2. Verfahren nach Anspruch 1,
wobei zumindest drei Halbkreise erzeugt und so angepasst werden, dass die Punktstreuer auf oder möglichst nahe an den Halbkreisen liegen, wobei die Halbkreise einen dritten Halbkreis (13) aufweisen, der einer Berührlinie der Außenseite der Mantelwand (102) mit einem Wartungsgang im Bereich der oberen Kante der Mantelwand (102) zugeordnet ist, wobei eine gesamte Höhe des Öltanks (100) ermittelt wird, wobei ein maximal möglicher Füllstand des Öltanks (100) aus dem ermittelten Durchmesser und der gesamten Höhe des Öltanks (100) ermittelt wird.

3. Verfahren nach einem der vorhergehenden Ansprüche,
wobei beim Anpassen der Halbkreise zumindest eine der folgenden Restriktionen angewendet wird:
- alle Halbkreise weisen den gleichen Radius auf;
- die Mittelpunkte aller Halbkreise liegen auf einer gemeinsamen zur Erdoberfläche senkrechten Geraden;
- der erste Halbkreis (11) und der dritte Halbkreis (13) liegen auf einer gemeinsamen Seite der Mantelwand (102);

4. Verfahren nach einem der vorhergehenden Ansprüche,
wobei ein einziges Radarbild nach einer Methode der synthetischen Apertur erzeugt wird.

5. Verfahren nach einem der vorhergehenden Ansprüche,
wobei die Verfahrensschritte nach einem der vorhergehenden Ansprüche zu zumindest zwei verschiedenen Zeitpunkten wiederholt ausgeführt werden, um eine Änderung des Füllstands des Öltanks (100) nachzuverfolgen.

6. Verfahren nach Anspruch 5,
wobei beim Anpassen der Halbkreise alle über die zwei Zeitpunkte am selben Ort verbleibende Punktstreuer der Berührlinie der Außenseite der Mantelwand (102) mit dem Erdboden oder der Berührlinie der Außenseite der Mantelwand (102) mit dem Wartungsgang im Bereich der oberen Kante der Mantelwand (102) zugeordnet werden, und alle über die Zeit in ihrem Ort veränderlichen Punktstreuer der Berührlinie der Innenseite der Mantelwand (102) des Öltanks (100) mit der oberen Stirnfläche des Schwimmdachs (104) zugeordnet werden, wobei jeder der betrachteten Punktstreuer auf interferometrische Kohärenz zwischen den zwei Zeitpunkten überprüft wird, um Verwechslungen zwischen den Punktstreuern auszuschließen.

7. Verfahren nach Anspruch 5,
wobei die Änderung des Füllstands des Öltanks (100) durch Lösen eines Optimierungsproblems ermittelt wird, wobei das Optimierungsproblem die Suche nach der maximal zusammengehörigen Anzahl von Punktstreuern über die zwei Zeitpunkte umfasst, wobei am selben Ort verbleibende Punktstreuer und über die Zeit in ihrem Ort veränderliche Punktstreuer voneinander getrennt werden und die Änderung des Füllstands des Öltanks (100) aus der Höhenänderung der über die Zeit in ihrem Ort veränderlichen Punktstreuer ermittelt wird.

8. Verfahren nach einem der Ansprüche 5 bis 7,
wobei die Verfahrensschritte nach einem der Ansprüche 1 bis 4 zu mehr als zwei verschiedenen Zeitpunkten wiederholt ausgeführt werden, wobei durch mehrfaches Gleichsetzen von an nicht aufeinander folgenden betrachteten Zeitpunkten erfassten Verschiebungen des Schwimmdachs (104) mit der Summe aller erfassten Verschiebungen des Schwimmdachs (104) zwischen den betrachteten Zeitpunkten ein überbestimmtes Gleichungssystem erzeugt wird, um eine Verschiebung des Schwimmdachs (104) über einen vorgegebenen Zeitraum zu ermitteln.

9. Radarsystem (2) für einen Satelliten (1) zum Ermitteln eines Füllstands eines zylindrischen Öltanks (100) mit einer Mantelwand (102) und einem Schwimmdach (104), aufweisend eine Radareinheit (3), die zum Aussenden von Mikrowellen aus Schrägsicht in Richtung eines auf der Erdoberfläche befindlichen zylindrischen Öltanks (100) und zum Empfangen von am zylindrischen Öltank (100) reflektierten Mikrowellen ausgeführt ist, und aufweisend eine Recheneinheit (5), die zum Erzeugen eines Radarbilds nach einer Methode der synthetischen Apertur aus den empfangenen Mikrowellen ausgeführt ist, wobei die Recheneinheit (5) **dadurch gekennzeichnet ist, dass** sie ausgeführt ist zum Ermitteln einer Vielzahl von Punktstreuern aus dem Radarbild durch Bildverarbeitung und/oder Signalverarbeitung so, dass das Radarbild nur noch binäre Informationen aufweist, wobei die Punktstreuer durch Reflexionen der auf den zylindrischen Öltank (100) treffenden Mikrowellen entstehen und auf dem Radarbild als sich farblich abhebende Punkte erscheinen, und zum Erzeugen und Anpassen von zumindest zwei Halbkreisen so unter Verwendung eines Verfahrens der nichtlinearen Optimierung oder einer Hough Transformation ausgeführt ist, dass die Punktstreuer auf oder möglichst nahe an den Halbkreisen liegen, wobei die Halbkreise zumindest folgende aufweisen: Ein einer Berührlinie der Außenseite der Mantelwand (102) mit dem Erdboden zugeordneter erster Halbkreis (11), und ein einer Berührlinie einer Innenseite der Mantelwand (102) des Öltanks (100) mit der oberen Stirnfläche des Schwimmdachs (104) zugeordneter zweiter Halbkreis (12), wobei die Recheneinheit (5) ferner zum Ermitteln eines Durchmessers des Öltanks (100) und einer Höhe des Schwimmdachs (104) gegenüber dem Erdboden aus dem jeweils angepassten ersten Halbkreis (11) und zweiten Halbkreis (12), und zum Ermitteln des Füllstands des Öltanks (100) aus dem ermittelten Durchmesser und der Höhe des Schwimmdachs (104) ausgeführt ist.

## Claims

1. A method for the determination of a fill level of a cylindrical oil tank (100) with a shell wall (102) and a floating roof (104), comprising the steps:
- Transmission (S1) from an oblique viewpoint of microwaves, from a satellite (1) that is orbiting or stationary in an earth orbit, in the direction of the cylindrical oil tank (100) located on the earth's surface,
- Reception (S2) of microwaves reflected from the cylindrical oil tank (100), and generation of a radar image using a synthetic aperture method, **characterised by** the steps:
- Determination (S3) of a multiplicity of point scatterers from the radar image by means of image processing and/or signal processing, such that the radar image then has only binary information, wherein the point scatterers are produced by reflections of microwaves striking the cylindrical oil tank (100), and appearing on the radar image as points that stand out in colour,
- Generation and adjustment (S4) of at least two semicircles using a method of non-linear optimisation, or a Hough transformation, such that the point scatterers lie on, or as close as possible to, the semicircles, wherein the semicircles have at least the following: a first semicircle (11) assigned to a line of contact between an outer face of the shell wall (102) and the ground, and a second semicircle (12) assigned to a line of contact between an inner face of the shell wall (102) and an upper end face of the floating roof (104),
- Determination (S5) of a diameter of the oil tank (100), and a height of the floating roof (104) relative to the ground, from the respectively adjusted first semicircle (11) and second semicircle (12), and
- Determination (S6) of the fill level of the oil tank (100) from the diameter of the oil tank (100) and the height of the floating roof (104) determined.

2. The method in accordance with Claim 1, wherein
at least three semicircles are generated and adjusted such that the point scatterers are on, or as close as possible to, the semicircles, wherein the semicircles have a third semicircle (13), which is assigned to a line of contact between the outer face of the shell wall (102) and a maintenance passage in the region of the upper edge of the shell wall (102), wherein a total height of the oil tank (100) is determined, wherein a maximum possible fill level of the oil tank (100) is determined from the diameter and the total height of the oil tank (100) that have been determined.

3. The method in accordance with one of the preceding claims, wherein
at least one of the following restrictions is applied when adjusting the semicircles:
- all semicircles have the same radius;
- the centres of all semicircles lie on a common straight line perpendicular to the earth's surface;
- the first semicircle (11) and the third semicircle (13) lie on a common face of the shell wall (102).

4. The method in accordance with one of the preceding claims, wherein
a single radar image is generated using a synthetic aperture method.

5. The method in accordance with one of the preceding claims, wherein
the method steps in accordance with one of the preceding claims are executed repeatedly at at least two different times, so as to track an alteration in the fill level of the oil tank (100).

6. The method in accordance with Claim 5, wherein
when adjusting the semicircles, all point scatterers remaining at the same location over the two points in time are assigned to the line of contact between the outer face of the shell wall (102) and the ground, or to the line of contact between the outer face of the shell wall (102) and the maintenance passage in the region of the upper edge of the shell wall (102), and all point scatterers whose location varies over time are assigned to the line of contact between the inner face of the shell wall (102) of the oil tank (100) and the upper end face of the floating roof (104), wherein each of the point scatterers under consideration is checked for interferometric coherence between the two points in time, so as to rule out any confusion between the point scatterers.

7. The method in accordance with Claim 5, wherein
the alteration in the filling level of the oil tank (100) is determined by solving an optimisation problem, wherein the optimisation problem comprises the search for the maximum number of related point scatterers over the two points in time, wherein point scatterers remaining at the same location, and point scatterers whose location alters over time, are separated from one another, and the change in the fill level of the oil tank (100) is determined from the change in height of the point scatterers whose locations alter over time.

8. The method in accordance with one of the Claims 5 to 7, wherein
the method steps in accordance with one of the Claims 1 to 4 are executed repeatedly at more than two different points in time, wherein by the multiple comparison of displacements of the floating roof (104) detected at points in time not considered consecutively, with the sum of all displacements of the floating roof (104) recorded between the points in time considered, an over-determined system of equations is generated, so as to determine a displacement of the floating roof (104) over a prescribed period of time.

9. A radar system (2) for a satellite (1) for purposes of determining a filling level of a cylindrical oil tank (100) with a shell wall (102) and a floating roof (104), comprising a radar unit (3), which is designed to emit microwaves from an oblique viewpoint in the direction of a cylindrical oil tank (100) located on the earth's surface, and to receive microwaves reflected from the cylindrical oil tank (100), and having a computing unit (5) that is designed to generate a radar image from the received microwaves using a synthetic aperture method, wherein the computing unit (5) is **characterised by** the fact that it is designed to determine a multiplicity of point scatterers from the radar image by image processing and/or signal processing, such that the radar image then has only binary information, wherein the point scatterers are produced by reflections of the microwaves striking the cylindrical oil tank (100) and appearing on the radar image as points that stand out in colour, and for purposes of generating and adjusting at least two semicircles a method of non-linear optimisation or a Hough transformation is used, such that the point scatterers lie on, or as close as possible to, the semicircles, wherein the semicircles comprise at least the following: a first semicircle (11) assigned to a line of contact between the outer face of the shell wall (102) and the ground, and a second semicircle (12) assigned to a line of contact between an inner face of the shell wall (102) of the oil tank (100) and the upper end face of the floating roof (104), wherein the computing unit (5) is furthermore designed to determine a diameter of the oil tank (100) and a height of the floating roof (104) relative to the ground from the respectively adjusted first semicircle (11) and second semicircle (12), and to determine the fill level of the oil tank (100) from the diameter and the height of the floating roof (104) determined.

## Revendications

1. Procédé de détermination d'un niveau de remplissage d'un réservoir d'hydrocarbures cylindrique (100) comprenant une paroi d'enveloppe (102) et un toit flottant (104), présentant les étapes :
- d'émission (S1) de micro-ondes d'un satellite (1) effectuant des cercles ou stationnaire en orbite terrestre en vue de biais en direction du réservoir d'hydrocarbures cylindrique (100) se trouvant à la surface de la terre,
- de réception (S2) de micro-ondes réfléchies sur le réservoir d'hydrocarbures cylindrique (100) et de production d'une image radar selon un procédé de l'ouverture synthétique,
**caractérisé par** les étapes :
- de détermination (S3) d'une pluralité de diffuseurs ponctuels à partir de l'image radar par traitement d'image et/ou traitement de signal de façon à ce que l'image radar ne présente plus que des informations binaires, dans lequel les diffuseurs ponctuels sont produits par des réflexions des micro-ondes arrivant sur le réservoir d'hydrocarbures cylindrique (100) et apparaissent en tant que points colorés en évidence sur l'image radar,
- de production et d'adaptation (S4) d'au moins deux demi-cercles de telle façon en utilisant un procédé de l'optimisation non-linéaire ou une transformée de Hough que les diffuseurs ponctuels reposent sur les, ou le plus proche possible des, demi-cercles, dans lequel les demi-cercles présentent au moins ce qui suit : un premier demi-cercle (11) attribué à une ligne de contact d'une face extérieure de la paroi d'enveloppe (102) avec le sol terrestre, et un deuxième demi-cercle (12) attribué à une ligne de contact d'une face intérieure de la paroi d'enveloppe (102) avec une face avant supérieure du toit flottant (104),
- de détermination (S5) d'un diamètre du réservoir d'hydrocarbures (100) et d'une hauteur du toit flottant (104) par rapport au sol terrestre à partir du premier demi-cercle (11) et du deuxième demi-cercle (12) respectivement adapté, et
- de détermination (S6) du niveau de remplissage du réservoir d'hydrocarbures (100) à partir du diamètre déterminé du réservoir d'hydrocarbures (100) et de la hauteur du toit flottant (104).

2. Procédé selon la revendication 1,
dans lequel au moins trois demi-cercles sont produits et ainsi adaptés que les diffuseurs ponctuels reposent sur les, ou le plus proche possible des, demi-cercles, dans lequel les demi-cercles présentent un troisième demi-cercle (13) qui est attribué à une ligne de contact de la face extérieure de la paroi d'enveloppe (102) avec un passage d'entretien au niveau du bord supérieur de la paroi d'entretien (102), dans lequel une hauteur totale du réservoir d'hydrocarbures (100) est déterminée, dans lequel un niveau de remplissage maximal possible du réservoir d'hydrocarbures (100) est déterminé à partir du diamètre déterminé et de la hauteur totale du réservoir d'hydrocarbures (100).

3. Procédé selon l'une des revendications précédentes, dans lequel lors de l'adaptation des demi-cercles au moins une des restrictions suivantes est appliquée :
- tous les demi-cercles présentent le même rayon ;
- les points médians de tous les demi-cercles reposent sur une droite verticale commune par rapport à la surface terrestre ;
- le premier demi-cercle (11) et le troisième demi-cercle (13) reposent sur une face commune de la paroi d'enveloppe (102).

4. Procédé selon l'une des revendications précédentes,
dans lequel une seule image radar est produite selon un procédé de l'ouverture synthétique.

5. Procédé selon l'une des revendications précédentes,
dans lequel les étapes de procédé selon l'une des revendications précédentes sont exécutées en étant répétées à aux moins deux moments différents, pour suivre la trace d'un changement du niveau de remplissage du réservoir d'hydrocarbures (100).

6. Procédé selon la revendication 5,
dans lequel lors de l'adaptation des demi-cercles, tous les diffuseurs ponctuels restant au même endroit sur les deux moments sont attribués à la ligne de contact de la face extérieure de la paroi d'enveloppe (102) avec le sol terrestre ou la ligne de contact de la face extérieure de la paroi d'enveloppe (102) avec le passage d'entretien au niveau du bord supérieur de la paroi d'enveloppe (102), et tous les diffuseurs ponctuels changeant d'endroit dans le temps sont attribués à la ligne de contact de la face intérieure de la paroi d'enveloppe (102) du réservoir d'hydrocarbures (100) avec la face avant supérieure du toit flottant (104), dans lequel la cohérence interférométrique de chacun des diffuseurs ponctuels considérés entre les deux moments est vérifiée, pour exclure des confusions entre les diffuseurs ponctuels.

7. Procédé selon la revendication 5,
dans lequel le changement du niveau de remplissage du réservoir d'hydrocarbures (100) est déterminé par résolution d'un problème d'optimisation, dans lequel le problème d'optimisation comprend la recherche du nombre maximal apparenté de diffuseurs ponctuels sur les deux moments, dans lequel les diffuseurs ponctuels restant au même endroit et les diffuseurs ponctuels changeant d'endroit dans le temps sont séparés les uns des autres et le changement du niveau de remplissage du réservoir d'hydrocarbures (100) est déterminé à partir du changement de hauteur des diffuseurs ponctuels changeant d'endroit dans le temps.

8. Procédé selon l'une des revendications 5 à 7,
dans lequel les étapes de procédé selon l'une des revendications 1 à 4 sont exécutées en étant répétées à plus de deux moments différents, dans lequel un système d'équation surdéterminé est produit par une comparaison répétée de décalages du toit flottant (104) détectés à des moments considérés ne se suivant pas consécutivement avec la somme de tous les décalages du toit flottant (104) détectés entre les moments considérés, pour déterminer un décalage du toit flottant (104) sur une période prédéfinie.

9. Système de radar (2) pour un satellite (1) pour déterminer un niveau de remplissage d'un réservoir d'hydrocarbures cylindrique (100) comprenant une paroi d'enveloppe (102) et un toit flottant (104), présentant une unité de radar (3) qui est conçue pour émettre des micro-ondes en vue de biais en direction d'un réservoir d'hydrocarbures cylindrique (100) se trouvant à la surface de la terre, et pour recevoir des micro-ondes réfléchies sur le réservoir d'hydrocarbures cylindrique (100), et présentant une unité de calcul (5) qui est conçue pour produire une image radar selon un procédé de l'ouverture synthétique à partir des micro-ondes reçues, dans lequel l'unité de calcul (5) est **caractérisée en ce qu'**elle est conçue pour déterminer une pluralité de diffuseurs ponctuels à partir de l'image radar par traitement d'image et/ou traitement de signal de façon à ce que l'image radar ne présente plus que des informations binaires, dans lequel les diffuseurs ponctuels sont produits par des réflexions des micro-ondes arrivant sur le réservoir d'hydrocarbures cylindrique (100) et apparaissent en tant que points colorés en évidence sur l'image radar, et pour produire et adapter au moins deux demi-cercles de telle façon en utilisant un procédé de l'optimisation non-linéaire ou une transformée de Hough que les diffuseurs ponctuels reposent sur les, ou le plus proche possible des, demi-cercles, dans lequel les demi-cercles présentent au moins ce qui suit : un premier demi-cercle (11) attribué à une ligne de contact d'une face extérieure de la paroi d'enveloppe (102) avec le sol terrestre, et un deuxième demi-cercle (12) attribué à une ligne de contact d'une face intérieure de la paroi d'enveloppe (102) du réservoir d'hydrocarbures (100) avec la face avant supérieure du toit flottant (104), dans lequel l'unité de calcul (5) est conçue en outre pour déterminer un diamètre du réservoir d'hydrocarbures (100) et une hauteur du toit flottant (104) par rapport au sol terrestre à partir du premier demi-cercle (11) et du deuxième demi-cercle (12) respectivement adapté, et pour déterminer le niveau de remplissage du réservoir d'hydrocarbures (100) à partir du diamètre déterminé et de la hauteur du toit flottant (104).
